# EUROPÄISCHE PATENTSCHRIFT

(11) **EP 3 123 056 B1**
(45) Veröffentlichungstag und Bekanntmachung des Hinweises auf die Patenterteilung: **02.10.2019**
(21) Anmeldenummer: 15711112.1
(22) Anmeldetag: 16.03.2015
(51) Int. Cl.: F16F 9/38

(54) **SCHUTZVORRICHTUNG FÜR EINEN STOSSDÄMPFER**
PROTECTIVE DEVICE FOR A SHOCK ABSORBER
DISPOSITIF DE PROTECTION DESTINÉ À UN PARE-CHOCS

(30) Priorität: 25.03.2014 DE 102014205501
(43) Veröffentlichungstag der Anmeldung: 01.02.2017
(73) Patentinhaber: SAF-HOLLAND GmbH, 63856 Bessenbach (DE)
(72) Erfinder: SCHIMETKA, Thomas, 63856 Bessenbach (DE)
(74) Vertreter: Müller Schupfner & Partner Patent- und Rechtsanwaltspartnerschaft mbB
(86) Internationale Anmeldenummer: PCT/EP2015/055402
(87) Internationale Veröffentlichungsnummer: WO 2015/144471

(56) Entgegenhaltungen:
- EP-A2- 2 256 365
- GB-A- 868 226
- US-A1- 2007 089 951
- US-A1- 2008 265 475

## Beschreibung

Die vorliegende Erfindung betrifft eine Schutzvorrichtung für einen Stoßdämpfer, insbesondere eine Nutzfahrzeugstoßdämpfer-Schutzvorrichtung, sowie eine Stoßdämpferanordnung, insbesondere Nutzfahrzeugstoßdämpferanordnung, die eine Schutzvorrichtung für den Kolbenabschnitt des Stoßdämpfers aufweist.

Schutzvorrichtungen der genannten Art sind aus dem Stand der Technik bekannt. So offenbart beispielsweise die DE 875 767 einen rohrförmigen Staubschutz, welcher das obere Ende einer Schraubenfeder, die sich um den Stoßdämpferzylinder erstreckt, umschließt. Nachteilig bei derartigen Schutzvorrichtungen ist jedoch, dass sich die Montage der Schutzvorrichtungen am Stoßdämpfer aufwendig und umständlich gestaltet.

Die EP 2 256 365 A3 betrifft eine Zylinderanordnung mit einer Kolbenstange, einem Schutzrohr und einem damit verbundenen Schutzdeckel.

Die US 2007/0089951 A1 betrifft eine Schutzvorrichtung für Luftfedern von Fahrzeugen.

Es ist daher Aufgabe der vorliegenden Erfindung, eine Schutzvorrichtung für einen Stoßdämpfer, insbesondere einen Nutzfahrzeugstoßdämpfer, sowie eine Stoßdämpferanordnung, insbesondere Nutzfahrzeugstoßdämpferanordnung, vorzusehen, die einfach montierbar sind und eine hohe Betriebssicherheit und Lebensdauer gewährleisten.

Diese Aufgabe wird durch eine Schutzvorrichtung für einen Stoßdämpfer, insbesondere einen Nutzfahrzeugstoßdämpfer, mit den Merkmalen des Anspruchs 1 und durch eine Stoßdämpferanordnung, insbesondere Nutzfahrzeugstoßdämpferanordnung, mit den Merkmalen des Anspruchs 13 gelöst. Bevorzugte Ausführungsformen sind Gegenstand der abhängigen Ansprüche.

Erfindungsgemäß ist eine Schutzvorrichtung für einen Stoßdämpfer, insbesondere einen Nutzfahrzeugstoßdämpfer, vorgesehen, umfassend einen ersten Basisbereich und einen zweiten Basisbereich, wobei der erste Basisbereich und der zweite Basisbereich derart miteinander verbunden sind, dass diese zueinander zwischen einem Montagezustand und einem Betriebszustand über eine Schwenkachse verschwenkbar sind, und wobei der erste Basisbereich und der zweite Basisbereich im Betriebszustand im Wesentlichen eine Hohlzylinderform bilden. Die erfindungsgemäße Schutzvorrichtung ist besonders vorteilhaft geeignet für einen Stoßdämpfer eines Nutzfahrzeugs, da es die Einbausituation von Stoßdämpfern in Nutzfahrzeugen in der Regel erlaubt, Elemente wie die Schutzvorrichtung an dem Befestigungsauge des Kolbenabschnitts, mittels welchem der Stoßdämpfer am Rahmen des Fahrzeugs festgelegt ist, anzuordnen und zu befestigen. Die Schutzvorrichtung weist einen ersten und einen zweiten Basisbereich auf, welche die eigentliche Schutzfunktion der Schutzvorrichtung verwirklichen. In anderen Worten sind der erste und zweite Basisbereich derart ausgelegt, dass diese die entsprechend zu schützenden Teile des Stoßdämpfers - in der Regel den freiliegenden Kolbenabschnitt desselben - vor äußeren Einwirkungen schützen. Hierfür sind der erste und zweite Basisbereich vorteilhafterweise aus einem Material gefertigt, welches äußeren Einflüssen standhält, beispielsweise einem Kunststoff oder einem Metall. Der erste und zweite Basisbereich sind zueinander beweglich derart gestaltet, dass diese zwischen einem Montagezustand und einem Betriebszustand über eine Schwenkachse verschwenkbar sind. In anderen Worten kann die Schutzvorrichtung in einen Montagezustand gebracht werden oder aufweisen, in welchem die Schutzvorrichtung an einem Stoßdämpfer anordenbar ist. Von dem Montagezustand kann die Schutzvorrichtung in einen Betriebszustand überführt werden, in welchem die Schutzvorrichtung - fixiert bzw. festgelegt am Stoßdämpfer - die Funktion des Schutzes des Stoßdämpfers vor äußeren Einflüssen übernimmt. Die Schwenkachse kann hierbei direkt an dem ersten und/oder zweiten Basisbereich angeordnet sein oder auch indirekt hiervon beabstandet durch zwischengeschaltete Elemente. Das zwischengeschaltete Element könnte beispielsweise eine Lasche sein, die den ersten und zweiten Basisbereich miteinander verbindet, so dass die Schwenkachse bezogen auf den ersten und zweiten Basisbereich nicht unveränderlich festgelegt sein muss, sondern - aufgrund der Flexibilität der Lasche - auch hinsichtlich ihrer Position variabel sein kann. Wesentlich hierbei ist jedoch, dass Mittel vorgesehen sind, die es ermöglichen, dass der erste Basisbereich zum zweiten Basisbereich verschwenkt werden kann. Im Betriebszustand bilden der erste und zweite Basisbereich im Wesentlichen eine Hohlzylinderform aus. Der Begriff "im Wesentlichen" ist hierbei insofern zu verstehen, dass der erste Basisbereich und der zweite Basisbereich in deren Betriebszustand gemeinsam entlang der Längsachse bzw. Zylinderachse der Hohlzylinderform zumindest bereichsweise, insbesondere überwiegend über den ersten Basisbereich und/oder zweiten Basisbereich eine Hohlzylinderform bilden. In anderen Worten können der erste Basisbereich und der zweite Basisbereich im Betriebszustand auch Abschnitte aufweisen, die von einer Hohlzylinderform abweichen, wobei es vorteilhaft ist, wenn der erste und zweite Basisbereich im Betriebszustand entlang ihrer Zylinderachse überwiegend eine Hohlzylinderform aufweisen bzw. bilden. Der Querschnitt der Hohlzylinderform kann beliebig gestaltet sein, beispielsweise vieleckig, ist jedoch besonders vorteilhafterweise rund oder kreisrund. Die vom ersten und zweiten Basisbereich im Betriebszustand ausgebildete Hohlzylinderform ist zumindest an einem stirnseitigen Ende offen ausgebildet und kann vorteilhafterweise an dem gegenüberliegenden stirnseitigen Ende zumindest bereichsweise geschlossen bzw. mit einem überwiegend geschlossenen Ende ausgebildet sein. Der erste und/oder zweite Basisbereich können zweckmäßigerweise somit die Konfiguration einer Schale aufweisen. Dadurch, dass der erste und zweite Basisbereich über eine Schwenkachse zwischen einem Betriebszustand und einem Montagezustand verlagerbar sind, ist eine besonders vorteilhaft einfache Montage der Schutzvorrichtung am Stoßdämpfer möglich, da die Schutzvorrichtung quasi im Montagezustand über den Stoßdämpfer übergestülpt werden kann und dann in den Betriebszustand verbracht werden kann und somit den Stoßdämpfer umschließt. Ein Ausbau des Stoßdämpfers ist somit nicht mehr notwendig.

Vorteilhafterweise sind der erste Basisbereich und der zweite Basisbereich über ein Scharnier, insbesondere über ein Filmscharnier, verbunden. Das Scharnier kann über zwischengeschaltete Elemente am ersten Basisbereich und/oder zweiten Basisbereich angeordnet sein. Besonders zweckmäßig ist jedoch, wenn das Scharnier am ersten Basisbereich und/oder zweiten Basisbereich direkt bzw. unmittelbar angeordnet ist. Eine besonders betriebssichere und langlebige Schutzvorrichtung kann bereitgestellt werden, wenn das Scharnier als Filmscharnier ausgebildet ist. Dieses besteht zweckmäßigerweise aus einer dünnwandigen Verbindung zwischen erstem und zweitem Basisbereich. Filmscharniere sind besonders bevorzugt bei einer Ausbildung des ersten und zweiten Basisbereichs aus einem Kunststoff. Besonders zweckmäßig ist es, wenn sich das Scharnier und insbesondere das Filmscharnier über den überwiegenden Teil, vorteilhafterweise den gesamten Teil der von den Basisbereichen ausgebildeten Hohlzylinderform erstreckt. Aufgrund der Durchgängigkeit des Scharniers wird eine besonders hohe Schutzwirkung erzielt, da verhindert wird, dass Fremdkörper über die Schwenkachse in das Innere der Schutzvorrichtung eindringen können.

Zweckmäßigerweise sind der erste Basisbereich und der zweite Basisbereich einstückig ausgebildet. Dies ist besonders vorteilhaft bei der Ausbildung des Scharniers als Filmscharnier, da der erste und zweite Basisbereich sowie das mit diesen einstückig ausgebildete Filmscharnier aus einem Kunststoff ausgebildet werden können. Es versteht sich, dass an dem ersten bzw. zweiten Basisbereich angeordnete weitere Elemente als separate Teile ausgebildet sein können oder aber ebenfalls mit dem ersten/zweiten Basisbereich einstückig ausgebildet sein können.

Zweckmäßigerweise steht die Schwenkachse parallel oder senkrecht zur Zylinderachse der Hohlzylinderform. Bei einer Schwenkachse, welche parallel zur Zylinderachse der Hohlzylinderform steht, ist es besonders vorteilhaft, wenn die Schwenkachse im Wesentlichen einer axial verlaufenden Kante des ersten und/oder zweiten Basisbereichs entspricht. Bei einer Ausbildung des Scharniers als Filmscharnier entsprechen somit die axial verlaufenden Kanten des ersten und zweiten Basisbereichs dem Scharnier und somit der parallel zur Hohlzylinderform stehenden Schwenkachse. Bei einer Ausbildung der Schwenkachse senkrecht zur Zylinderachse ist es besonders vorteilhaft, wenn im Betriebszustand des ersten und zweiten Basisbereichs ein Ende der Hohlzylinderform im Wesentlichen stirnseitig verschlossen ist und die Schwenkachse in diesem Ende ausgebildet ist, beispielsweise als Filmscharnier. Besonders zweckmäßig ist, wenn bei einer senkrecht zur Zylinderachse stehenden Schwenkachse die Schwenkachse die Zylinderachse der Hohlzylinderform schneidet.

In einer bevorzugten Ausführungsform weist die Schutzvorrichtung zumindest einen Aufnahmeabschnitt zur Aufnahme eines Lagerbereichs des Stoßdämpfers auf, der am ersten Basisbereich und/oder zweiten Basisbereich ausgebildet ist. Der Lagerbereich des Stoßdämpfers kann insbesondere das Befestigungsauge des Kolbenabschnitts des Stoßdämpfers sein. Der Aufnahmeabschnitt kann an einem der Basisbereiche vorgesehen sein. Es ist jedoch bevorzugt, wenn der erste und der zweite Basisbereich jeweils einen Aufnahmeabschnitt zur Aufnahme des Lagerbereichs des Stoßdämpfers aufweisen. Der Aufnahmeabschnitt ist besonders vorteilhafterweise derart ausgestaltet, dass der Lagerbereich des Stoßdämpfers durch diesen nach außen hindurch ragen bzw. hervorragen kann. Der Aufnahmeabschnitt kann somit vorteilhafterweise einen Kraft- und/oder Formschluss zwischen der Schutzvorrichtung und dem Lagerbereich des Stoßdämpfers bereitstellen, so dass einer Verlagerung der Schutzvorrichtung relativ zum Stoßdämpfer entgegengewirkt werden kann bzw. diese verhindert werden kann.

Vorzugsweise ist der bzw. sind die Aufnahmeabschnitt(e) als sich in zumindest einen der Basisbereiche hinein erstreckender Rücksprung oder Ausnehmung ausgebildet, welcher/welche vorzugsweise gekrümmt oder teilkreisförmig ausgebildet ist/sind. Der Aufnahmeabschnitt erstreckt sich somit besonders zweckmäßigerweise radial durch oder in den oder die Basisbereiche und bildet somit zweckmäßigerweise eine Ausnehmung, durch welche sich der Lagerbereich des Stoßdämpfers von der Innenseite der Schutzvorrichtung nach außen erstrecken kann. Die Ausnehmung bzw. der Rücksprung weist vorteilhafterweise eine gekrümmte oder teilkreisförmige Oberflächenkonfiguration auf. Insbesondere ist die Ausnehmung bzw. der Rücksprung etwa halbkreisförmig ausgestaltet. Da der sich durch den Rücksprung bzw. die Ausnehmung hindurch erstreckende Lagerbereich des Stoßdämpfers in der Regel ebenfalls eine gekrümmte Oberfläche ausbildet, kann somit eine besonders schmutzgeschützte sichere Verbindung zwischen Schutzvorrichtung und Stoßdämpfer in diesem Bereich vorgesehen werden.

Vorteilhafterweise ist der Aufnahmeabschnitt an einer axial verlaufenden Kante des ersten und/oder zweiten Basisbereichs vorgesehen. Der Aufnahmeabschnitt - und insbesondere der als Rücksprung oder Ausnehmung ausgebildete Aufnahmeabschnitt - ist somit zumindest teilweise, vorzugsweise vollständig an einer axial verlaufenden Kante eines oder beider Basisbereiche vorgesehen.

Zweckmäßigerweise sind zwei gegenüberliegende Aufnahmeabschnitte an zumindest einem der Basisbereiche vorgesehen. Besonders vorteilhaft ist, wenn die sich gegenüberliegenden Aufnahmeabschnitte im Wesentlichen die gleiche geometrische Konfiguration aufweisen und besonders vorteilhafterweise koaxial zu einer senkrecht zur Zylinderachse stehenden Achse ausgebildet sind. Die gegenüberliegenden Aufnahmeabschnitte sind besonders vorteilhaft derart gestaltet, dass deren Achse, auf welcher sie koaxial liegen, die Zylinderachse schneidet.

Bevorzugt weist der Aufnahmeabschnitt einen radial bzw. nach außen vorstehenden Rand auf. In anderen Worten ist der Aufnahmeabschnitt derart ausgebildet, dass dieser radial nach außen über die von dem ersten bzw. zweiten Basisbereich gebildete Grundform hervorragt. Hierdurch ist es möglich, den Aufnahmeabschnitt besonders stabil auszubilden.

Weiterhin bevorzugt grenzen im Betriebszustand der Aufnahmeabschnitt des ersten Basisbereichs und der Aufnahmeabschnitt des zweiten Basisbereichs aneinander an, insbesondere derart, dass diese eine umfänglich geschlossene Ausnehmung bilden, durch welche der Lagerbereich des Stoßdämpfers zumindest teilweise hindurch ragen kann. Die Aufnahmeabschnitte des ersten und zweiten Basisbereichs sind vorteilhafterweise zumindest teilweise an der axial verlaufenden Kante der Basisbereiche vorgesehen, so dass die Aufnahmeabschnitte der Basisbereiche im Montagezustand nicht aneinander angrenzen, jedoch im Betriebszustand aneinander angrenzen bzw. kontaktieren. Es ist möglich, die Aufnahmeabschnitte vollständig im Bereich der axial verlaufenden Kante anzuordnen, ohne dass die Aufnahmeabschnitte am stirnseitigen Ende der Basisbereiche vorgesehen sind. Somit wird - im Betriebszustand der Basisbereiche - eine umfänglich geschlossene Ausnehmung gebildet. Hierdurch wird ein besonders vorteilhafter Schutz des Stoßdämpfers vor äußeren Einwirkungen ermöglicht.

In einer bevorzugten Ausführungsform weist einer der Basisbereiche zumindest ein Verrastelement und der andere Basisbereich zumindest eine Verrastaufnahme auf, in welche das Verrastelement eingreifen kann, um die Schutzvorrichtung im Betriebszustand zu halten. Es versteht sich, dass einer der Basisbereiche auch - insbesondere vorteilhaft alternierend - Verrastelemente und Verrastaufnahmen aufweisen kann, wobei der andere Basisbereich dazu passende Verrastaufnahmen und Verrastelemente umfasst. Die Verrastelemente können beispielsweise als Haken oder Laschen ausgebildet sein, welche mit entsprechenden Verrastaufnahmen in Eingriff bringbar sind. Durch die Verrastelemente und Verrastaufnahmen ist es möglich, die Schutzvorrichtung im Betriebszustand zu halten und bei Lösen der Verrastelemente von der Verrastaufnahme die Schutzvorrichtung zurück in den Montagezustand zu bringen. Die Schutzvorrichtung ist somit zweckmäßigerweise derart gestaltet, dass eine Verlagerung zwischen Montagezustand und Betriebszustand mehrfach bzw. wiederholt möglich ist. Insofern ist die Schutzvorrichtung demontierbar gestaltet bzw. ausgebildet.

Vorteilhafterweise sind das Verrastelement und die Verrastaufnahme an jeweils einer oder beiden axial verlaufenden Kanten der Basisbereiche ausgebildet. So kann beispielsweise eine Konfiguration geschaffen werden, bei welcher die Schwenkachse an einer vorzugsweise gemeinsamen axialen Kante der Basisbereiche vorgesehen ist, während die Verrastelemente und Verrastaufnahmen an der anderen, gegenüberliegenden Kante des jeweiligen Basisbereichs vorgesehen sind. Bei einer senkrecht zur Zylinderachse stehenden Schwenkachse ist es besonders vorteilhaft, wenn die Verrastelemente und Verrastaufnahmen an jeweils beiden axialen Kanten der beiden Basisbereiche vorgesehen sind.

Erfindungsgemäß ist an einem Basisbereich eine axial vorragende Lasche vorgesehen, die an ihrem freien Ende mit dem anderen Basisbereich in Eingriff gebracht werden kann. Die Lasche ist somit mit einem ihrer Enden, insbesondere integral beziehungsweise einstückig, mit einem Basisbereich verbunden. Insbesondere ist die Lasche derart ausgebildet, dass diese im Betriebszustand der Schutzvorrichtung mit ihrem freien Ende an dem anderen Basisbereich in Eingriff gebracht werden kann. Hierfür weist die Lasche an ihrem freien Ende sowie der andere Basisbereich entsprechende Eingriffsmittel auf. Zweckmäßigerweise ist die Lasche an dem Ende des Basisbereichs vorgesehen, an dem oder in dessen Nähe der Aufnahmeabschnitt vorgesehen ist.

Weiterhin erfindungsgemäß ist eine Stoßdämpferanordnung, insbesondere Nutzfahrzeugstoßdämpfer-Anordnung, vorgesehen, umfassend einen Stoßdämpfer mit einem Kolbenabschnitt und einem Zylinderabschnitt, welche längsbeweglich zueinander oder ineinander verlagerbar sind, und eine Schutzvorrichtung, wie sie insbesondere vorstehend beschrieben wurde, die einen ersten Basisbereich und einen zweiten Basisbereich aufweist, welche derart miteinander verbunden sind, dass diese zueinander zwischen einem Montagezustand und einem Betriebszustand über eine Schwenkachse verschwenkbar sind, wobei die Schutzvorrichtung derart an dem Stoßdämpfer anordenbar ist, dass der erste Basisbereich und der zweite Basisbereich im Betriebszustand den Kolbenabschnitt umschließen. Die Schutzvorrichtung ist insbesondere relativ zu dem Stoßdämpfer, und insbesondere dessen Kolbenabschnitt, lagegesichert anordenbar beziehungsweise angeordnet. In anderen Worten ist eine Verlagerung der Schutzvorrichtung relativ zu dem Kolbenabschnitt nicht möglich, wenn die Schutzvorrichtung an dem Stoßdämpfer angeordnet und montiert ist. Hierfür ist die Schutzvorrichtung insbesondere an dem distalen Ende beziehungsweise dem Lagerbereich bzw. Lagerauge des Kolbenabschnitts festlegbar. Die Schutzvorrichtung ist derart gestaltet, dass diese den Kolbenabschnitt radial beziehungsweise umfänglich umschließt. Hierbei erstrecken sich der erste und zweite Basisbereich der Schutzvorrichtung axial über den gesamten Teil des im ausgefahrenen Zustand außerhalb des Zylinderabschnitts liegenden Kolbenabschnitts. Erfindungsgemäß überdeckt die Schutzvorrichtung in dem vollständig ausgefahrenen Zustand auch ein dem Kolbenabschnitt zugewandtes distales Ende des Zylinderabschnitts.

Erfindungsgemäß ist der Innendurchmesser des durch den ersten und zweiten Basisbereich im Betriebszustand gebildeten Hohlzylinders um das 1,01 bis 1,3-fache und vorzugsweise um das 1,02 bis 1,2-fache größer als der Außendurchmesser des Zylinderabschnitts des Stoßdämpfers.

Es versteht sich, dass weitere Vorteile und Merkmale der erfindungsgemäßen Schutzvorrichtung auch in der erfindungsgemäßen Stoßdämpferanordnung Anwendung finden können.

Weitere Vorteile und Merkmale der Erfindung ergeben sich aus der nachfolgenden Beschreibung von bevorzugten Ausführungsformen anhand der beigefügten Figuren, wobei einzelne Merkmale einzelner Ausführungsformen zu neuen Ausführungsformen miteinander kombiniert werden können. Es zeigen:
- Figur 1: eine erste bevorzugte Ausführungsform einer erfindungsgemäßen Schutzvorrichtung im Betriebszustand;
- Figur 2: die Schutzvorrichtung gemäß Figur 1 im Betriebszustand;
- Figur 3: eine weitere Ausführungsform einer erfindungsgemäßen Schutzvorrichtung im Montagezustand;
- Figur 4: die Schutzvorrichtung gemäß Figur 3 im Betriebszustand;
- Figur 5 a) und b): eine bevorzugte Ausführungsform einer erfindungsgemäßen Stoßdämpferanordnung;
- Figur 6: eine weitere bevorzugte Ausführungsform einer erfindungsgemäßen Stoßdämpferanordnung.

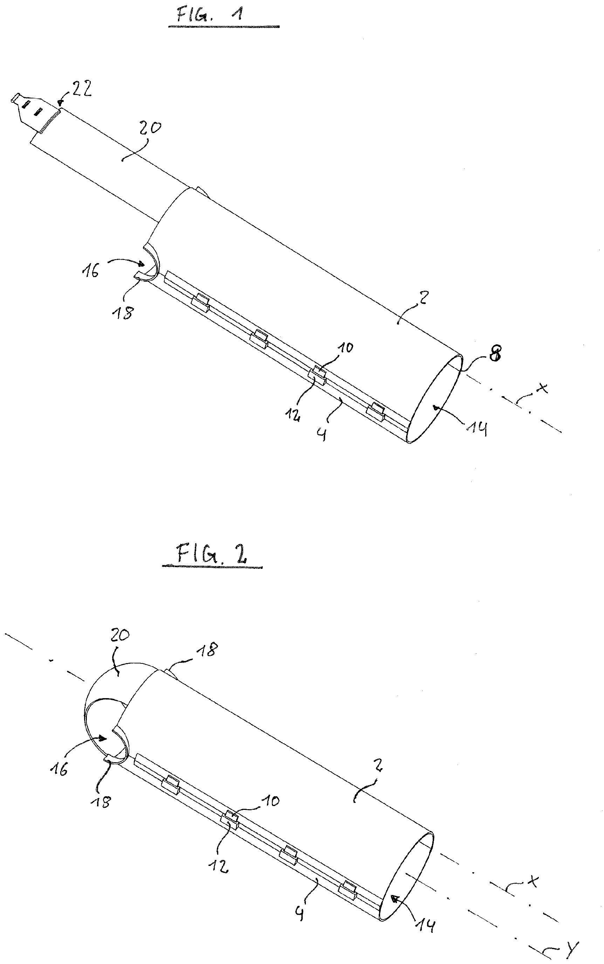

In den Figuren 1 und 2 ist eine erste Ausführungsform einer erfindungsgemäßen Schutzvorrichtung im Montagezustand (nicht dargestellt) und im Betriebszustand (Figuren 1 und 2) dargestellt. Die Schutzvorrichtung weist einen ersten Basisbereich 2 und einen zweiten Basisbereich 4 auf, die über eine Schwenkachse x zueinander verschwenkbar sind.

Der erste Basisbereich 2 und der zweite Basisbereich 4 weisen jeweils axial verlaufende Kanten 6 auf, wobei die axial verlaufenden Kanten 6 der Basisbereiche 2, 4 im Betriebszustand im Wesentlichen nebeneinander oder aneinander oder gegenüber liegen. Wenn der erste Basisbereich 2 und der zweite Basisbereich 4 im Betriebszustand sind, bilden diese zumindest bereichsweise eine Hohlzylinderform aus, die eine Längs- beziehungsweise Zylinderachse y definiert. Besonders zweckmäßig ist, wenn die axial verlaufenden Kanten 6 im Wesentlichen parallel zur Zylinderachse y verlaufen.

Um den ersten Basisbereich 2 zum zweiten Basisbereich 4 verschwenkbar beziehungsweise verlagerbar zu gestalten, ist zwischen diesen ein Scharnier 8 vorgesehen, welches besonders vorteilhaft als Filmscharnier ausgebildet sein kann. Um die Schutzvorrichtung im Betriebszustand zu halten, weist der erste Basisbereich an einer seiner axial verlaufenden Kanten 6 eine Vielzahl von Verrastelementen 10 auf, welche in entsprechende Verrastaufnahmen 12 eingreifen.

Der von den Basisbereichen 2, 4 gebildete Hohlzylinder weist an einer seiner Stirnseiten ein offenes Ende 14 auf. An einem dem offenen Ende 14 gegenüberliegenden Bereich, insbesondere ebenfalls an einem distalen Ende, ist ein Aufnahmeabschnitt 16 ausgebildet, der zur Aufnahme eines Lagerbereichs des Stoßdämpfers dient. Wie ersichtlich, ist der Aufnahmeabschnitt 16 an jedem der Basisbereiche 2, 4 und an jeder deren axial verlaufenden Kanten 6 ausgebildet. Der Aufnahmeabschnitt 16 weist jeweils eine teilkreisförmige Geometrie auf und ist mit einem sich radial nach außen vorstehenden Rand 18 zur Verstärkung des Aufnahmeabschnitts 16 ausgebildet.

Um die Betriebssicherheit der Schutzvorrichtung weiter zu erhöhen, ist an dem dem offenen Ende 14 gegenüberliegenden Ende des ersten Basisbereichs 2 eine Lasche 20 ausgebildet, die an ihrem freien Ende 22 entsprechende Eingriffsmittel aufweist, um mit Eingriffsmitteln des zweiten Basisbereichs 4 in Eingriff gebracht zu werden. Hierfür ist die Lasche 20 besonders zweckmäßigerweise flexibel ausgebildet, damit diese zu dem zweiten Basisbereich 4 hin gebogen werden kann (vergleiche Figur 2).

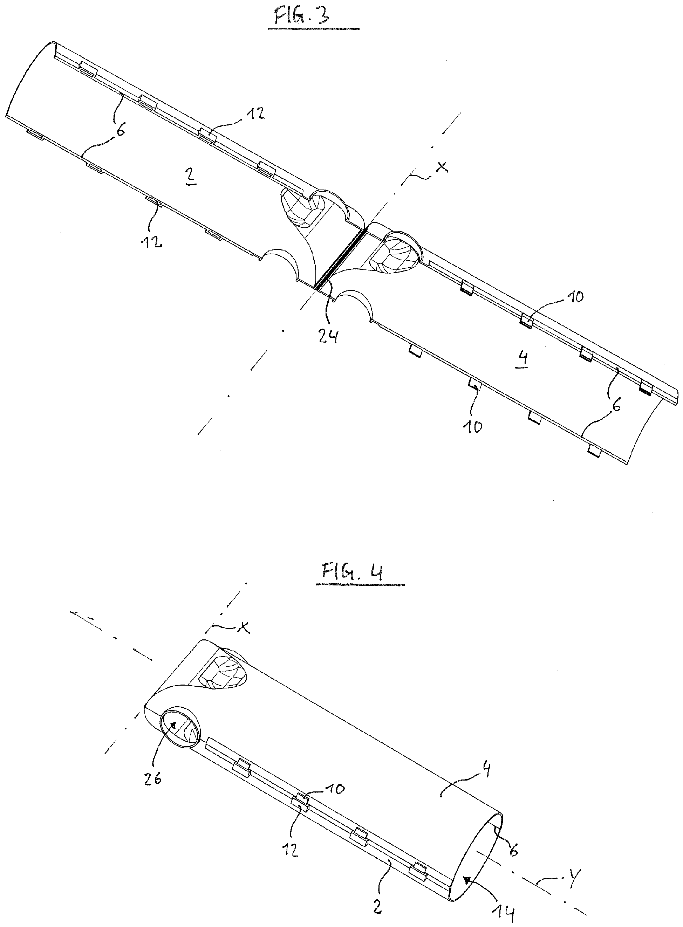

Bei der in Figuren 3 und 4 dargestellten Ausführungsform der erfindungsgemäßen Schutzvorrichtung liegt die Schwenkachse x nicht parallel zur Zylinderachse y, sondern steht senkrecht zur Zylinderachse y. Um eine Verschwenkbarkeit der Basisbereiche 2, 4 zu ermöglichen, ist somit ein Scharnier 24 vorgesehen, welches nicht an den axial verlaufenden Kanten 6 ausgebildet ist, sondern an dem dem offenen Ende 14 gegenüberliegenden, zumindest teilweise geschlossenen Ende der Basisbereiche 2, 4.

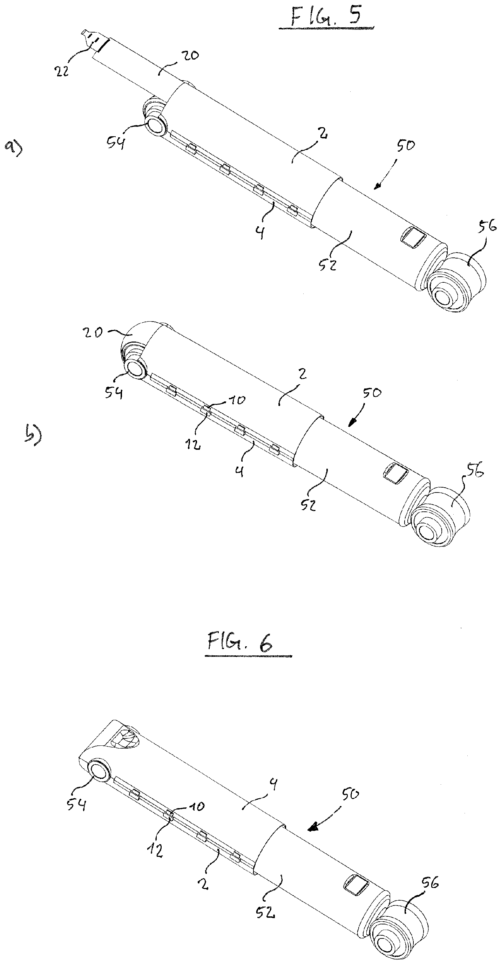

Weiterhin unterschiedlich zu der mit Bezug auf die Figuren 1 und 2 beschriebenen Ausführungsform ist, dass die Aufnahmeabschnitte 16 ausschließlich an den axial verlaufenden Kanten 6 der Basisbereiche 2, 4 ausgebildet sind und sich nicht bis in das distale Ende der Basisbereiche 2, 4 erstrecken. Wie in Figur 5 dargestellt, bilden somit die Aufnahmeabschnitte 16 im Betriebszustand der Schutzvorrichtung eine umfänglich geschlossene Ausnehmung 26 aus.

In Figur 5 ist eine Ausführungsform einer erfindungsgemäßen Stoßdämpferanordnung dargestellt. Die Stoßdämpferanordnung umfasst einen Stoßdämpfer 50, der einen Kolbenabschnitt aufweist, welcher in einen Zylinderabschnitt 52 einschiebbar und ausziehbar ist. Um den Stoßdämpfer 50 am Rahmen und Fahrwerk des Fahrzeugs zu befestigen, weist der Kolbenabschnitt einen Lagerbereich 54 und der Zylinderabschnitt 52 einen Lagerbereich 56 auf, welche üblicherweise als Befestigungsauge ausgebildet sind.

Um den Kolbenabschnitt zu schützen, umschließen der erste Basisbereich 2 und der zweite Basisbereich 4 einer Schutzvorrichtung entsprechend der in Figs. 1 und 2 dargestellten Ausführungsform im Betriebszustand den Kolbenabschnitt. Hierdurch wird das Eindringen von Fremdkörpern in bzw. an den Kolbenabschnitt verhindert. Wie ersichtlich, ist der Innendurchmesser des durch den ersten Basisbereich 2 und den zweiten Basisbereich 4 gebildeten Hohlzylinders zumindest im Bereich des Kolbenabschnitts, der in den Zylinderabschnitt 52 eintauchen kann, größer als der Außendurchmesser des Zylinderabschnitts 52.

In Figur 6 ist eine weitere Ausführungsform einer erfindungsgemäßen Stoßdämpferanordnung dargestellt. Hierbei umschließen der erste Basisbereich 2 und der zweite Basisbereich 4 einer Schutzvorrichtung entsprechend der in Figs. 3 und 4 dargestellten Ausführungsform im Betriebszustand den Kolbenabschnitt.

### Bezugszeichenliste

- 2: erster Basisbereich
- 4: zweiter Basisbereich
- 6: axial verlaufende Kante
- 8: Scharnier
- 10: Verrastelement
- 12: Verrastaufnahme
- 14: offenes Ende
- 16: Aufnahmeabschnitt
- 18: Rand
- 20: Lasche
- 22: freies Ende
- 24: Scharnier
- 26: Ausnehmung
- 50: Stoßdämpfer
- 52: Zylinderabschnitt
- 54: Lagerbereich
- 56: Lagerbereich
- x: Schwenkachse
- y: Zylinderachse

## Patentansprüche

1. Schutzvorrichtung für einen Stoßdämpfer, insbesondere einen Nutzfahrzeugstoßdämpfer, umfassend
einen ersten Basisbereich (2) und einen zweiten Basisbereich (4),
wobei der erste Basisbereich (2) und der zweite Basisbereich (4) derart miteinander verbunden sind, dass diese zueinander zwischen einem Montagezustand und einem Betriebszustand über eine Schwenkachse (x) verschwenkbar sind,
wobei der erste Basisbereich (2) und der zweite Basisbereich (4) im Betriebszustand im Wesentlichen eine Hohlzylinderform bilden, und
wobei an einem Basisbereich (2) eine axial vorragende Lasche (20) vorgesehen ist, die an ihrem freien Ende (22) mit dem anderen Basisbereich (4) in Eingriff gebracht werden kann.

2. Schutzvorrichtung nach Anspruch 1, wobei der erste Basisbereich (2) und der zweite Basisbereich (4) einstückig ausgebildet und/oder über ein Scharnier (8; 24), insbesondere über ein Filmscharnier, verbunden sind.

3. Schutzvorrichtung nach einem der vorhergehenden Ansprüche, wobei die Schwenkachse (x) parallel oder senkrecht zur Zylinderachse (y) der Hohlzylinderform steht.

4. Schutzvorrichtung nach einem der vorhergehenden Ansprüche, weiterhin aufweisend zumindest einen Aufnahmeabschnitt (16) zur Aufnahme eines durch den Aufnahmeabschnitt (16) hindurchragenden Lagerbereichs (54) des Stoßdämpfers (50), wobei der Aufnahmeabschnitt (16) am ersten Basisbereich (2) und/oder zweiten Basisbereich (4) ausgebildet ist.

5. Schutzvorrichtung nach Anspruch 4, wobei der Aufnahmeabschnitt (16) als sich in zumindest einen der Basisbereiche (2,4) hineinerstreckender Rücksprung oder Ausnehmung (26) ausgebildet ist, welcher vorzugsweise gekrümmt oder teilkreisförmig ausgebildet ist.

6. Schutzvorrichtung nach einem der Ansprüche 4 oder 5, wobei der Aufnahmeabschnitt (16) an einer axial verlaufenden Kante (6) des ersten und/oder zweiten Basisbereichs (2, 4) vorgesehen ist.

7. Schutzvorrichtung nach einem der Ansprüche 4 - 6, wobei zwei gegenüberliegende Aufnahmeabschnitte (16) an zumindest einem der Basisbereiche (2,4) vorgesehen sind.

8. Schutzvorrichtung nach einem der Ansprüche 4 - 7, wobei der Aufnahmeabschnitt (16) einen radial bzw. nach außen vorstehenden Rand (18) aufweist.

9. Schutzvorrichtung nach einem der Ansprüche 4 - 8, wobei im Betriebszustand der Aufnahmeabschnitt (16) des ersten Basisbereichs (2) und der Aufnahmeabschnitt (16) des zweiten Basisbereichs (4) aneinander angrenzen, insbesondere derart, dass diese eine umfänglich geschlossene Ausnehmung (26) bilden, durch welche der Lagerbereich (56) des Stoßdämpfers (50) zumindest teilweise hindurchragen kann.

10. Schutzvorrichtung nach einem der vorhergehenden Ansprüche, wobei einer der Basisbereiche (2,4) zumindest ein Verrastelement (10) und der andere Basisbereich (2,4) zumindest eine Verrastaufnahme (12) aufweist, in welche das Verrastelement (10) eingreifen kann, um die Schutzvorrichtung im Betriebszustand zu halten.

11. Schutzvorrichtung nach Anspruch 10, wobei das Verrastelement (10) und die Verrastaufnahme (12) an jeweils einer oder beiden axial verlaufenden Kanten (6) der Basisbereiche (2, 4) ausgebildet sind.

12. Schutzvorrichtung nach einem der vorhergehenden Ansprüche, wobei der erste Basisbereich (2) und/oder der zweite Basisbereich die Konfiguration einer Schale aufweisen..

13. Stoßdämpferanordnung, insbesondere Nutzfahrzeugstoßdämpferanordnung, umfassend
einen Stoßdämpfer (50) mit einem Kolbenabschnitt und einem Zylinderabschnitt (52), welche längsbeweglich zueinander oder ineinander verlagerbar sind, und einer Schutzvorrichtung insbesondere nach einem der vorhergehenden Ansprüche, die einen ersten Basisbereich (2) und einen zweiten Basisbereich (4) aufweist, welche derart miteinander verbunden sind, dass diese zueinander zwischen einem Montagezustand und einem Betriebszustand über eine Schwenkachse (x) verschwenkbar sind,
wobei die Schutzvorrichtung derart an dem Stoßdämpfer (50) anordenbar ist, dass der erste Basisbereich (2) und der zweite Basisbereich (4) im Betriebszustand den Kolbenabschnitt umschließen, und wobei sich der erste und zweite Basisbereich (2,4) der Schutzvorrichtung axial über den gesamten Teil des im ausgefahrenen Zustand außerhalb des Zylinderabschnitts (52) liegenden Kolbenabschnitts erstrecken, und wobei die Schutzvorrichtung in dem vollständig ausgefahrenen Zustand auch ein dem Kolbenabschnitt zugewandtes distales Ende des Zylinderabschnitts (52) überdeckt, wobei der Innendurchmesser des durch den ersten und zweiten Basisbereich (2, 4) im Betriebszustand gebildeten Hohlzylinders um das 1,01 bis 1,3-fache größer ist als der Außendurchmesser des Zylinderabschnitts (52) des Stoßdämpfers (50).

## Claims

1. A protective device for a shock absorber, in particular a commercial vehicle shock absorber, comprising a first base area (2) and a second base area (4), wherein the first base area (2) and the second base area (4) are connected to one another in such a way that via a swivel axis (x) they can be swiveled in relation to one another between an assembly state and an operating state,
wherein the first base area (2) and the second base area (4) in the operating state substantially form a hollow cylindrical shape, and
wherein an axially projecting strap (20) is provided on one base area (2), which strap at its free end (22) can be brought into engagement with the other base area (4).

2. The protective device as claimed in claim 1, wherein the first base area (2) and the second base area (4) are formed in one piece and/or are connected via a hinge (8; 24), in particular a film hinge.

3. The protective device as claimed in one of the preceding claims, wherein the swivel axis (x) lies parallel or perpendicular to the cylinder axis (y) of the hollow cylindrical shape.

4. The protective device as claimed in one of the preceding claims, further comprising at least one receiving portion (16) for receiving a bearing area (54) of the shock absorber (50), which bearing area protrudes through the receiving portion (16), wherein the receiving portion (16) is formed on the first base area (2) and/or the second base area (4).

5. The protective device as claimed in claim 4, wherein the receiving portion (16) is formed as a recess or opening (26), extending into at least one of the base areas (2, 4), which opening is preferably of a curved or sectorial shape.

6. The protective device as claimed in one of claims 4 and 5, wherein the receiving portion (16) is provided on an axially running edge (6) of the first base area (2) and/or the second base area (4).

7. The protective device as claimed in one of claims 4-6, wherein two opposing receiving portions (16) are provided on at least one of the base areas (2, 4).

8. The protective device as claimed in one of claims 4-7, wherein the receiving portion (16) comprises an edge (18) protruding radially outwards.

9. The protective device as claimed in one of claims 4-8, wherein in the operating state the receiving portion (16) of the first base area (2) and the receiving portion (16) of the second base area (4) adjoin one another in such a way that they form a peripherally closed opening (26), through which the bearing area (56) of the shock absorber (50) can at least partially protrude.

10. The protective device as claimed in one of the preceding claims, wherein one of the base areas (2, 4) comprises at least one latching element (10) and the other base area (2, 4) at least one catch (12), in which the latching element (10) can engage in order to keep the protective device in the operating state.

11. The protective device as claimed in claim 10, wherein the latching element (10) and the catch (12) are each formed on one or on both axially running edges (6) of the base areas (2, 4).

12. The protective device as claimed in one of the preceding claims, wherein the first base area (2) and/or the second base area has/have the configuration of a dish.

13. A shock absorber arrangement, in particular a commercial vehicle shock absorber arrangement, comprising a shock absorber (50) having a piston portion and a cylinder portion (52), which are longitudinally moveable in relation to one another or displaceable in one another, and a protective device, in particular one as claimed in one of the preceding claims, which comprises a first base area (2) and a second base area (4), which are connected to one another in such a way that via a swivel axis (x) they can be swiveled in relation to one another between an assembly state and an operating state,
wherein the protective device can be arranged on the shock absorber (50) in such a way that in the operating state the first base area (2) and the second base area (4) enclose the piston portion, and
wherein the first base area (2) and the second base area (4) of the protective device axially extend over the entire part of that piston portion which in its extended state lies outside the cylinder portion (52), and wherein the protective device in the fully extended state also covers a remote end of the cylinder portion (52) facing the piston portion, wherein the inside diameter of the hollow cylinder formed by the first base area (2) and the second base area (4) in the operating state is 1.01 to 1.3 times greater than the outside diameter of the cylinder portion (52) of the shock absorber (50).

## Revendications

1. Dispositif de protection pour un amortisseur, en particulier un amortisseur de véhicule utilitaire, comprenant
une première zone de base (2) et une deuxième zone de base (4),
la première zone de base (2) et la deuxième zone de base (4) étant reliées l'une à l'autre de telle sorte qu'elles peuvent pivoter l'une par rapport à l'autre entre un état de montage et un état de fonctionnement via un axe de pivotement (x),
la première zone de base (2) et la deuxième zone de base (4) formant, à l'état de fonctionnement, sensiblement une forme de cylindre creux et
une patte en saillie axiale (20) étant prévue sur une zone de base (2), laquelle peut être amenée, à son extrémité libre (22), en engagement avec l'autre zone de base (4).

2. Dispositif de protection selon la revendication 1, dans lequel la première zone de base (2) et la deuxième zone de base (4) sont formées d'une seule pièce et/ou sont reliées par une charnière (8 ; 24), en particulier par une charnière à film.

3. Dispositif de protection conformément à l'une des revendications précédentes, dans lequel l'axe de pivotement (x) est parallèle ou perpendiculaire à l'axe du cylindre (y) de la forme de cylindre creux.

4. Dispositif de protection selon l'une des revendications précédentes, comprenant en outre au moins un tronçon de réception (16) pour recevoir une zone de palier (54) de l'amortisseur (50) faisant saillie à travers le tronçon de réception (16), le tronçon de réception (16) étant formé sur la première zone de base (2) et/ou la deuxième zone de base (4).

5. Dispositif de protection selon la revendication 4, dans lequel le tronçon de réception (16) est réalisée sous forme de ressaut ou d'évidement (26) s'étendant dans au moins l'une des zones de base (2, 4), lequel est de préférence réalisé de forme incurvée ou partiellement circulaire.

6. Dispositif de protection selon l'une des revendications 4 ou 5, dans lequel le tronçon de réception (16) est prévu sur un bord (6) s'étendant axialement, de la première et/ou de la deuxième zone de base (2, 4).

7. Dispositif de protection selon l'une des revendications 4 à 6, dans lequel deux tronçons de réception opposés (16) sont prévus sur au moins l'une des zones de base (2, 4).

8. Dispositif de protection selon l'une des revendications 4 à 7, dans lequel le tronçon de réception (16) présente un bord (18) faisant saillie radialement ou vers l'extérieur, respectivement.

9. Dispositif de protection selon l'une des revendications 4 à 8, dans lequel le tronçon de réception (16) de la première zone de base (2) et le tronçon de réception (16) de la deuxième zone de base (4) sont contigus l'un à l'autre à l'état de fonctionnement, en particulier de telle sorte qu'elles forment un évidement (26) fermé sur la périphérie, à travers lequel la zone de support (56) de l'amortisseur (50) peut passer au moins partiellement.

10. Dispositif de protection selon l'une des revendications précédentes, dans lequel l'une des zones de base (2, 4) présente au moins un élément de verrouillage (10) et l'autre zone de base (2, 4) présente au moins un logement de verrouillage (12) dans lequel peut s'engager l'élément de verrouillage (10) pour maintenir le dispositif de protection dans l'état de fonctionnement.

11. Dispositif de protection selon la revendication 10, dans lequel l'élément de verrouillage (10) et le logement de verrouillage (12) sont réalisés sur respectivement un ou sur les deux bords (6) s'étendant axialement des zones de base (2, 4).

12. Dispositif de protection selon l'une des revendications précédentes, dans lequel la première zone de base (2) et/ou la deuxième zone de base présentent la configuration d'une coque.

13. Agencement d'amortisseur, en particulier agencement d'amortisseur pour véhicule utilitaire, comprenant
un amortisseur (50) avec un segment de piston et un segment de cylindre (52) qui peuvent se déplacer longitudinalement l'un par rapport à l'autre ou l'un dans l'autre, et
un dispositif de protection, en particulier selon l'une des revendications précédentes, qui présente une première zone de base (2) et une deuxième zone de base (4) qui sont reliées entre elles de telle sorte que celles-ci peuvent être pivotées par un axe de pivotement (x) entre une position de montage et une position de fonctionnement,
dans lequel le dispositif de protection peut être agencé sur l'amortisseur (50) de telle sorte que la première zone de base (2) et la deuxième zone de base (4) entourent le segment de piston à l'état de fonctionnement, et dans lequel la première et la deuxième zone de base (2, 4) du dispositif de protection s'étendent axialement sur toute la partie du segment de piston qui est située à l'extérieur du segment de cylindre (52) dans l'état déployé, et dans lequel le dispositif de protection, à l'état totalement déployé, recouvre également une extrémité distale du segment de piston qui est tournée vers le segment de piston, le diamètre intérieur du cylindre creux formé par la première et la par deuxième zone de base (2, 4) à l'état de fonctionnement étant de 1,01 à 1,3 fois plus grand que le diamètre extérieur du segment de cylindre (52) de l'amortisseur (50).
